# EUROPÄISCHE PATENTSCHRIFT

(11) **EP 2 132 845 B1**
(45) Veröffentlichungstag und Bekanntmachung des Hinweises auf die Patenterteilung: **21.07.2010**
(21) Anmeldenummer: 08707410.0
(22) Anmeldetag: 30.01.2008
(51) Int. Cl.: H02B 15/00

(54) **SCHALTPULT**
CONTROL DESK
PUPITRE DE COMMANDE

(30) Priorität: 02.02.2007 DE 102007006053
(43) Veröffentlichungstag der Anmeldung: 16.12.2009
(73) Patentinhaber: Rittal GmbH & Co. KG, 35726 Herborn (DE)
(72) Erfinder: WIRBELAUER, Jörg, 35781 Weilburg (DE); PREUSSNER-PFAFF, Sascha, 35745 Herborn (DE); SCHMITT, Heinz, 35716 Dietzhölztal (DE); NEUHOF, Markus, 35630 Ehringshausen-Niederlemp (DE)
(74) Vertreter: Fleck, Hermann-Josef
(86) Internationale Anmeldenummer: PCT/EP2008/000714
(87) Internationale Veröffentlichungsnummer: WO 2008/092657

(56) Entgegenhaltungen:
- DE-A1- 4 005 137
- FR-A- 2 705 019

## Beschreibung

Die Erfindung betrifft ein Schaltpult mit einem Schrankunterteil, einem Pultteil und einem Aufsatzteil. Das Pultteil ist auf dem Schrankunterteil angeordnet und steht über dessen Vorderseite vor. Das Aufsatzteil ist an dem Pultteil angeordnet, wobei der gegenüber dem Aufsatzteil vorstehende Teil des Pultteils mittels einer Blende verschließbar ist.

Aus der DE 40 05 137 C2 ist ein derartiger Schaltpult bekannt, bei dem das zur Aufnahme eines Röhren-Bildschirmgeräts entsprechend tief ausgebildete Aufsatzteil mit seiner sich horizontal erstreckenden unteren Seite auf der sich horizontal erstreckenden oberen Seite des Pultteils angeordnet ist. Um eine noch größere Einbautiefe zu erreichen, ist die Rückseite des Aufsatzteils mittels einer ausladenden Abdeckhaube abgedeckt. Ein Röhren-Bildschirmgerät ist besonders tief bauend und schwer, so dass bei dem bekannten Schaltpult durch die horizontale Anlagefläche zwischen dem Aufsatzteil und dem Pultteil eine besonders stabile und auch ausreichend tiefe Aufnahme für das Röhren-Bildschirmgerät geschaffen ist. Zudem können zwischen dem tief bauenden Aufsatzteil und dem Pultteil in deren Anlageflächen besonders große Durchgangsöffnungen zur Durchführung von elektronischen Einbauten oder Kabeln vorgesehen werden.

Bei dem bekannten Schaltpult ist aufgrund der großen Einbautiefe des Aufsatzteils der gegenüber dem Aufsatzteil vorstehende Teil des Pultteils und dadurch die dem Bediener zugewandte, mittels einer Blende verschließbare Arbeitsfläche eingeschränkt. In der Blende können beispielsweise Anzeigen und Bedienelement angeordnet sein oder aber auch eine Freifläche als Ablage nach Art eines Schreibpults vorgesehen sein. Da heutzutage die altbekannten Röhren-Bildschirmgeräte weitgehend durch flach bauende LCD- oder Plasma-Bildschirmgeräte abgelöst sind, ist beim Einbau eines der letztgenannten Bildschirmgeräte in das Aufsatzteil keine besonders große Einbautiefe desselben mehr notwendig. Vielmehr könnte dann das Aufsatzteil ebenfalls sehr schmal ausgebildet sein. Da bei flacher Ausgestaltung des aufsatzteils jedoch auch die horizontale Anlagefläche zwischen dem Aufsatzteil und dem Pultteil sehr klein und insbesondere senkrecht zum Bildschirm sehr schmal ausgebildet wäre, ist eine ausreichende Stabilität nicht gewährleistet. Zudem können zwischen dem schmal bauenden Aufsatzteil und dem Pultteil in deren Anlageflächen nur sehr kleine bzw. schmale Durchgangsöffnungen vorgesehen werden, die keine ausreichende Durchführung von elektronischen Einbauten oder Kabeln erlauben.

Es ist Aufgabe der Erfindung, ein Schaltpult der eingangs erwähnten Art zu schaffen, bei dem eine besonders stabile Verbindung zwischen einem insbesondere schmal bauenden Aufsatzteil und dem Pultteil geschaffen werden kann, wobei gleichzeitig zwischen dem Aufsatzteil und dem Pultteil ausreichend große Durchgangsöffnungen zur Durchführung von elektronischen Einbauten oder Kabeln geschaffen werden können.

Diese Aufgabe der Erfindung wird durch ein Schaltpult gemäß den Merkmalen des Anspruchs 1 gelöst. Vorteilhafte Weiterbildungen sind jeweils in den Unteransprüchen beschrieben.

Demgemäß ist die Rückseite des Pultteils von der Rückseite des Schrankunterteils ausgehend in Richtung auf die Blende des Pultteils geneigt ausgebildet.

An dieser geneigten Rückseite des Pultteils ist das Aufsatzteil mit dessen unterer Seite angeordnet. Die Neigung der geneigten Rückseite des Pultteils entspricht dabei der Neigung der zugekehrten unteren Seite des Aufsatzteils. Vorzugsweise kann die Rückseite des Pultteils im Winkel von etwa 45° zur Horizontalen geneigt sein.

Durch diese Neigung bzw. Anschrägung der zugekehrten Seiten von Aufsatzteil und Pultteil wird die Verbindungsfläche im Gegensatz zu einer horizontal verlaufenden Anlagefläche vergrößert, so dass eine stabile Verbindung zwischen Aufsatzteil und Pultteil möglich ist.

Da die beiderseitigen Anlageflächen vergrößert sind, ist es auch auf einfache Weise möglich, große Durchgangsöffnungen zur Durchführung von elektronischen Einbauten oder Kabeln zu schaffen. Zu diesem Zweck kann an der unteren Seite des Aufsatzteils eine Durchgangsöffnung und an der geneigten Rückseite des Pultteils eine korrespondierende Durchgangsöffnung zur Durchführung von elektrischen Einbauten und/oder Kabeln ausgebildet sein.

Um dem Benutzer einen ausreichenden Abstand zu dem Aufsatzteil bzw. einen komfortablen Blickwinkel auf ein darin eingebautes Bildschirmgerät oder sonstige elektrische Einbauten zu ermöglichen, kann die Rückseite des Aufsatzteils mittels einer geneigten Rückwand verschlossen ist, welche von der Rückseite des Schrankunterteils ausgeht und diese überragt.

Vorzugsweise kann die Rückseite des Aufsatzteils die Rückseite des Schrankunterteils in einem Winkel von etwa 15° überragen.

Entsprechend kann dann auch die Vorderseite des Aufsatzteils geneigt sein. Dabei kann die Vorderseite des Aufsatzteils mittels einer geneigten Blende verschließbar sein, in welche das Bildschirmgerät oder sonstige elektrische Einbauten eingebaut sind und welche von dem gegenüber dem Aufsatzteil vorstehenden Teil des Pultteils ausgeht und in Richtung auf die Rückseite des Aufsatzteils geneigt ist.

Dabei können die Vorderseite des Aufsatzteils und die Rückseite des Aufsatzteils in Richtung auf die obere Seite des Aufsatzteils zueinander geneigt sein. Vorzugsweise können die Vorderseite des Aufsatzteils und die Rückseite des Aufsatzteils in einem Winkel von etwa 10° zueinander geneigt sein.

Um die Kosten für notwendiges Werkzeug zu reduzieren und die Herstellung des Schaltpults zu vereinfachen, kann das Aufsatzteil im wesentlich gleich dem Pultteil geformt sein. Insbesondere können die geschrägten Kontaktflächen an der geneigten Rückseite des Pultteils und der zugekehrten unteren Seite des Aufsatzteils gleich ausgebildet sein und insbesondere eine gleiche Neigung aufweisen.

Um die weitere, insbesondere senkrechte Durchführung von elektrischen Einbauten und/oder Kabeln zu ermöglichen, kann an der unteren Seite des Pultteils eine Durchgangsöffnung und an der oberen Seite des Schrankunterteils eine korrespondierende Durchgangsöffnung ausgebildet sein. Die Größe der Durchgangsöffnung ist durch die obere, dem Pultteil zugewandte Fläche des Schrankunterteils begrenzt.

Eine feste Verbindung zwischen dem Aufsatzteil und dem Pultteil kann dadurch auf einfache Weise erreicht werden, dass zwischen der unteren Seite des Aufsatzteils und der geneigten Rückseite des Pultteils eine Mehrzahl von Schraubverbindungen wirksam ist, welche das Aufsatzteil lösbar mit dem Pultteil verbindet. Dabei können an der geneigten unteren Seite des Aufsatzteils eine Mehrzahl von Schraubbolzen und an der geneigten Rückseite des Pultteils korrespondierende Löcher zur Aufnahme der Schraubbolzen angeordnet sind. Durch Aufschrauben von Schraubenmuttern auf die durch die korrespondierenden Löcher im Pultteil hindurch geführten Schraubbolzen wird eine Sicherung am Pultteil realisiert.

Um den Innenraum des Aufsatzteils und des Pultteils insbesondere gegen Feuchtigkeit und Staub abzudichten, kann zwischen der unteren Seite des Aufsatzteils und der geneigten Rückseite des Pultteils eine Dichtung angeordnet sein.

Damit gleichartige Schaltpulte unmittelbar in einer Reihe nebeneinander angeordnet werden können und/oder ein Schaltpult im Wesentlichen spaltfrei seitlich an eine ebene Wand beispielsweise eines Schaltschranks platziert werden kann, können die Seitenwände des Aufsatzteils im Wesentlichen bündig mit den Seitenwänden des Pultteils abschließen. Auch können die Seitenwände des Pultteils im Wesentlichen bündig mit den Seitenwänden des Schrankunterteils abschließen.

Nachfolgend wird die Erfindung anhand einer bevorzugten Ausführungsform unter Bezugnahme auf die beigefügten Zeichnungen näher erläutert.

Es zeigen:
- Figur 1: in Seitendarstellung ein Schaltpult im montierten Zustand;
- Figur 2: die Rückansicht des in Figur 1 gezeigten Schaltpults;
- Figur 3: die Forderansicht des in den Figuren 1 und 2 gezeigten Schaltpults;
- Figur 4: in Seitendarstellung das in den Figuren 1 bis 3 gezeigte Schaltpult, wo- bei das Aufsatzteil im nicht montierten Zustand dargestellt ist;
- Figur 5: in perspektivischer Darstellung das in den Figuren 1 bis 4 gezeigte Schaltpult, wobei das Aufsatzteil weggelassen und das Pultteil im nicht montierten Zustand dargestellt ist;
- Figur 6: in perspektivischer Darstellung den bei der Montage des Pultteils auf dem Schrankunterteil verwendeten Doppelverbinder, wobei der Dop- pelverbinder einseitig in einen Ausbruch am Schrankunterteil eingeführt wird;
- Figur 7: in perspektivischer Darstellung den in Figur 6 gezeigten Doppelverbin- der, wobei der Doppelverbinder auf einer Seite in einen Ausbruch am Schrankunterteil eingeschnappt ist und auf der anderen Seite in einen Ausbruch am Pultteil eingeführt wird; und
- Figur 8: in perspektivischer Darstellung den in den Figuren 6 und 7 gezeigten Doppelverbinder, wobei der Doppelverbinder beidseitig in je einen Aus- bruch am Schrankunterteil und am Pultteil eingeschnappt ist.

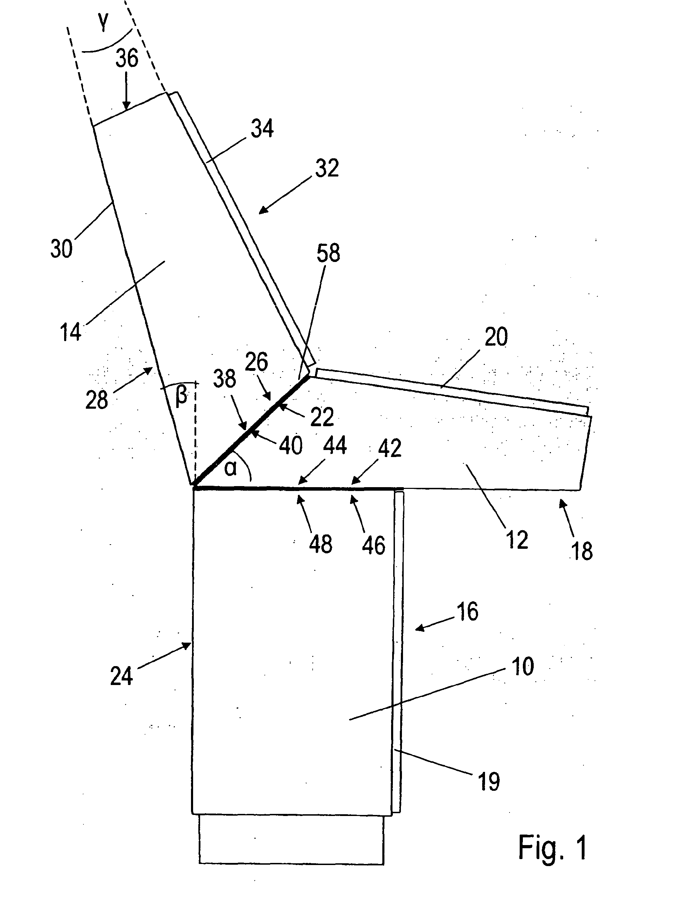

Die Fig. 1 zeigt in Seitendarstellung ein Schaltpult in montiertem Zustand. Das Schaltpult besteht aus einem Schrankunterteil 10, einem Pultteil 12 und einem Aufsatzteil 14, die im Wesentlichen aus Stahlblech aufgebaut sind. Das Pultteil 12 ist auf dem Schrankunterteil 10 aufgesetzt und steht über dessen Vorderseite 16 mit dem Teil 18 vor. Eine als Klappe ausgebildete Blende 20 verschließt die Oberseite des gegenüber dem Aufsatzteil 14 vorstehenden Teils 18 des Pultteils 12.

Das Aufsatzteil 14 ist an dem Pultteil 12 angeordnet. Dabei steht das Pultteil 12 an der Vorderseite 32 des Aufsatzteiles 14 vor, und die Vorderseite 32 des Aufsatzteiles 14 ist gegenüber der Vorderseite 16 des Schrankunterteils 10 zurückgesetzt.

Die Rückseite 22 des Pultteils 12 ist von der Rückseite 24 des Schrankunterteils 10 ausgehend in Richtung auf die Blende 20 des Pultteils 12 geneigt ausgebildet. Dabei ist die Rückseite 22 des Pultteils 12 im Winkel α von etwa 45° zur Horizontalen geneigt. Das Aufsatzteil 14 ist mit dessen unterer Seite 26 an der geneigten Rückseite 22 des Pultteils 12 angeordnet. Die Neigung der Rückseite 22 des Pultteils 12 entspricht der Neigung der zugekehrten unteren Seite 26 des Aufsatzteils 14.

Die Rückseite 28 des Aufsatzteils 14 ist mittels einer geneigten Rückwand 30 verschlossen, welche von der Rückseite 24 des Schrankunterteils 10 ausgeht und diese überragt. Die Rückseite 28 des Aufsatzteils 14 überragt die Rückseite 24 des Schrankunterteils 10 in einem Winkel β von etwa 15°.

Die Vorderseite 32 des Aufsatzteiles 14 ist leicht nach hinten geneigt und mittels einer als Klappe ausgebildeten geneigten Blende 34 verschlossen. Die Blende 34 geht von dem gegenüber dem Aufsatzteil 14 vorstehenden Teil 18 des Pultteils 12 aus und ist in Richtung auf die Rückseite 28 des Aufsatzteils 14 geneigt.

Die Vorderseite 32 des Aufsatzteils 14 und die Rückseite 28 des Aufsatzteils 14 sind in Richtung auf die obere Seite 36 des Aufsatzteils 14 zueinander geneigt. Die Vorderseite 32 des Aufsatzteils 14 und die Rückseite 28 des Aufsatzteils 14 sind in einem Winkel γ von etwa 10° zueinander geneigt.

Das Aufsatzteil 14 ist im wesentlich gleich dem Pultteil 12 geformt. Insbesondere sind die geschrägten Kontaktflächen an der geneigten Rückseite 22 des Pultteils 12 und der zugekehrten unteren Seite 26 des Aufsatzteils 14 gleich ausgebildet und weisen dieselbe Neigung auf.

An der unteren Seite 26 des Aufsatzteils 14 ist eine Durchgangsöffnung 38 ausgebildet. An der geneigten Rückseite 22 des Pultteils 12 ist eine korrespondierende Durchgangsöffnung 40 zur Durchführung von elektrischen Einbauten und/oder Kabeln ausgebildet. Die offene Durchgangsfläche der Durchgangsöffnungen 38 und 40 wird durch die Anlagefläche der geneigten Rückseite 22 des Pultteils 12 und der zugekehrten unteren Seite 26 des Aufsatzteils 14 definiert.

An der unteren Seite 42 des Pultteils 12 ist eine Durchgangsöffnung 44 und an der oberen Seite 46 des Schrankunterteils 10 ist eine korrespondierende Durchgangsöffnung 48 zur Durchführung von elektrischen Einbauten und/oder Kabeln ausgebildet.

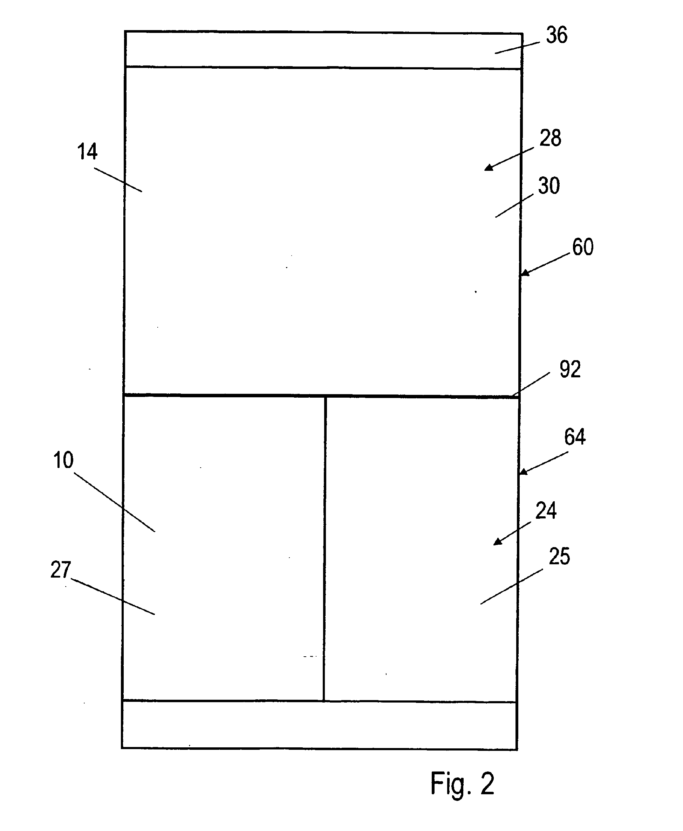

Die Figur 2 zeigt die Rückansicht des in Figur 1 gezeigten Schaltpults. In dieser Darstellung sind nur das Schrankunterteil 10 und darüber das Aufsatzteil 14 zu erkennen. Das Schrankunterteil 10 ist an seiner Rückseite 24 mit zwei angelenkten Türen 25 und 27 verschlossen. Die Rückseite 28 des Aufsatzteils 14 ist mit einer geschlossenen Rückwand 30 versehen. Die obere Seite 36 des Aufsatzteils 14 ist ebenfalls geschlossen ausgebildet.

Die Seitenwände 60 des Aufsatzteils 14 schließen bündig mit den Seitenwänden 62 des Pultteils 12 ab. Die Seitenwände 62 des Pultteils 12 schließen wiederum bündig mit den Seitenwänden 64 des Schrankunterteils 10 ab.

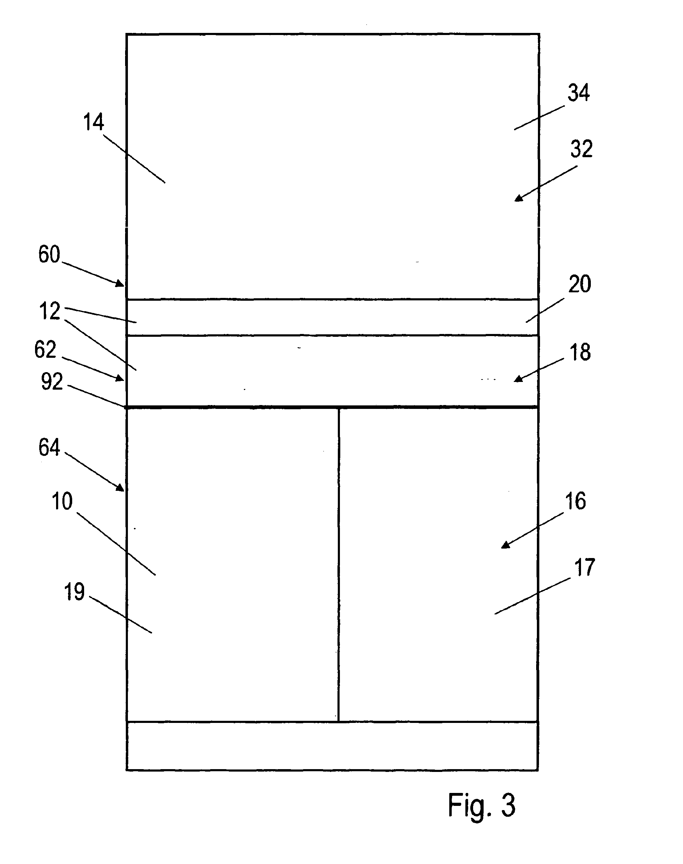

Die Figur 3 zeigt die Forderansicht des in den Figuren 1 und 2 gezeigten Schaltpults. In dieser Darstellung sind das Schrankunterteil 10, das darauf aufgesetzte Pultteil 12 und das darüber angeordnete Aufsatzteil 14 zu erkennen. Das Schrankunterteil 10 ist an der Vorderseite 16 mit zwei angelenkten Türen 17 und 19 verschlossen. Die als Klappe ausgebildete Blende 20 verschließt die Oberseite des gegenüber dem Aufsatzteil 14 vorstehenden Teils 18 des Pultteils 12. Die Vorderseite 32 des Aufsatzteils 14 ist mittels der als Klappe ausgebildeten Blende 34 verschlossen.

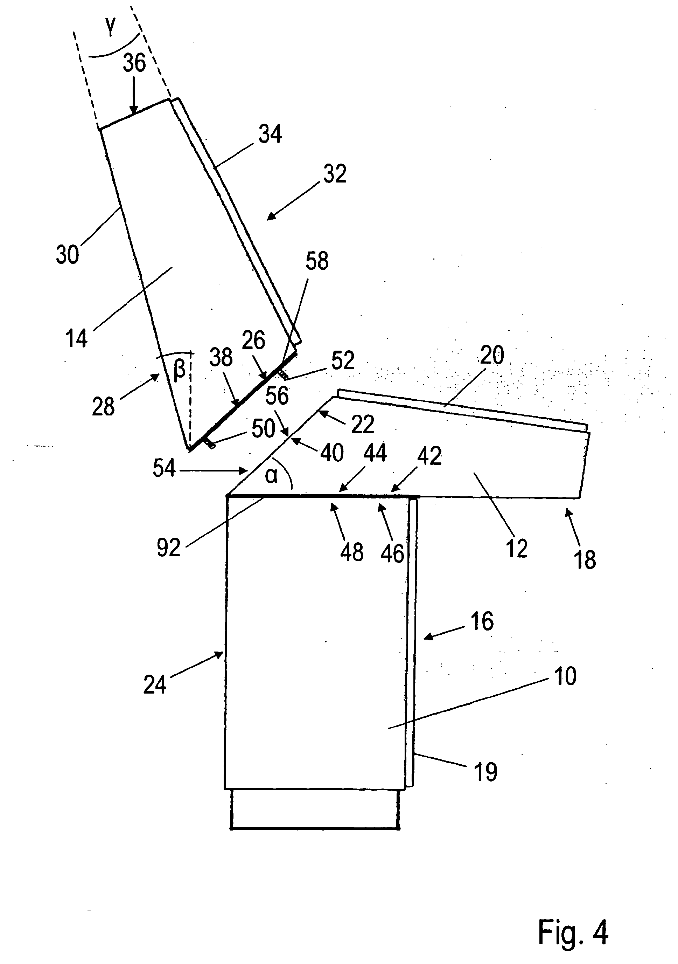

Die Figur 4 zeigt in Seitendarstellung das in den Figuren 1 bis 3 gezeigte Schaltpult, wobei das Aufsatzteil 14 im nicht montierten Zustand dargestellt ist. Zwischen der unteren Seite 26 des Aufsatzteils 14 und der geneigten Rückseite 22 des Pultteils 12 ist eine Mehrzahl von Schraubverbindungen wirksam, welche das Aufsatzteil 14 lösbar mit dem Pultteil 12 verbindet. Hierzu sind an der geneigten unteren Seite 26 des Aufsatzteils 14 eine Mehrzahl von Schraubbolzen angeschweißt, von denen in der Figur 4 nur die zwei Schraubbolzen 50 und 52 dargestellt sind. An der geneigten Rückseite 22 des Pultteils 12 sind zur Aufnahme der Schraubbolzen 50 und 56 korrespondierende Löcher angeordnet, von denen in der Figur 4 nur zwei Löcher mit den Bezugszeichen 54 und 56 gekennzeichnet sind.

Zwischen der unteren Seite 26 des Aufsatzteils 14 und der geneigten Rückseite 22 des Pultteils 12 ist eine Dichtung 58 angeordnet. Die Köpfe der an der unteren Seite 26 des Aufsatzteils 14 angeschweißten Schraubbolzen 50 und 52 weisen eine Höhe auf, die im Wesentlichen der Dicke der eingelegten Dichtung 58 entspricht. Hierdurch wird vermieden, dass die Dichtung 58 zwischen dem Aufsatzteil 14 und dem Pultteil 12 zerquetscht wird.

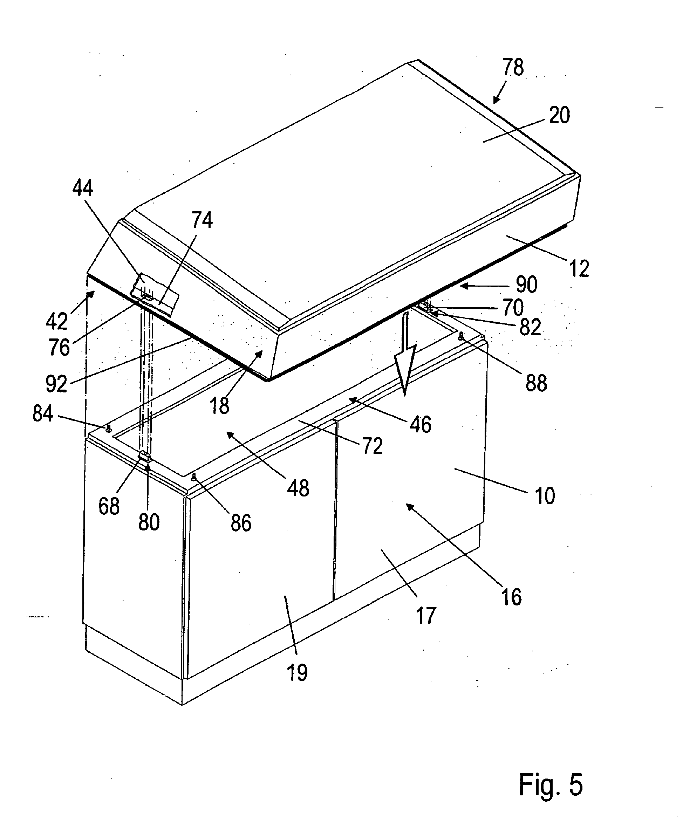

Die Figur 5 zeigt in perspektivischer Darstellung das in den Figuren 1 bis 4 gezeigte Schaltpult, wobei das Aufsatzteil weggelassen und das Pultteil 12 im nicht montierten Zustand dargestellt ist.

Der Randbereich der oberen Seite 46 des Schrankunterteils 10 ist als ein um eine zentrale Durchgangsöffnung 48 umlaufender Rahmen 72 ausgebildet. An der unteren Seite 42 des Pultteils 12 ist wiederum ein um eine zentrale Durchgangsöffnung 44 umlaufender Rahmen 74 ausgebildet.

Am Rahmen 74 an der unteren Seite 42 des Pultteils 12 ist an den zwei kurzen sich zueinander parallel erstreckenden Seiten des Pultteils 14 jeweils ein Ausbruch 76 und 78 mittig ausgebildet. !n diese Ausbrüche 76 und 78 greifen die am Rahmen 72 an der oberen Seite 46 des Schrankunterteils 10 angebrachten korrespondierenden Schnappverbinder 68 und 70 ein.

Die Schnappverbinder 68 und 70 sind als Doppelverbinder ausgebildet, die dazu dienen, zwei Bauteile schnappend miteinander zu verbinden, wobei jeder Doppelverbinder einerseits in einen Ausbruch am einen Bauteil und anderseits in einen Ausbruch am anderen Bauteil einschnappt und somit beide Bauteile zueinander festlegt.

Am Rahmen 72 an der oberen Seite 46 des Schrankunterteils 10 ist an den zwei kurzen sich zueinander parallel erstreckenden Seiten des Schrankunterteils 10 jeweils ein Ausbruch 80 und 82 mittig ausgebildet. Die Doppelverbinder 68 und 70 greifen einerseits in die Ausbrüche 80 und 82 an der oberen Seite 46 des Schrankunterteils 10 und andererseits in die Ausbrüche 76 und 78 der unteren Seite 42 des Pultteils 12 ein und legen das Pultteil 12 relativ zum Schrankunterteil 10 schnappend fest.

In den Eckbereichen des Rahmens 72 an der oberen Seite 46 des Schrankunterteils 10 ist jeweils ein Führungsstift 84, 86, 88 und 90 angeschweißt.

Die Führungsstifte 84, 86, 88 und 90 sind als Schraubbolzen ausgebildet, welche in am Rahmen 74 an der unteren Seite 42 des Pultteils 12 angebrachte korrespondierende Durchgangsbohrungen einführbar und dort mittels Schraubenmuttern fixierbar sind.

Zwischen dem Rahmen 72 an der oberen Seite 46 des Schrankunterteils 10 und dem Rahmen 74 an der unteren Seite 42 des Pultteils 12 ist eine umlaufende Dichtung 92 angeordnet. Die Köpfe der am Rahmen 72 an der oberen Seite 46 des Schrankunterteils 10 angeschweißten Schraubbolzen 84, 86, 88 und 90 weisen eine Höhe auf, die im Wesentlichen der Dicke der Dichtung 92 entspricht. Hierdurch wird vermieden, dass die Dichtung 92 zwischen dem Pultteil 12 und dem Schrankunterteil 10 zerquetscht wird.

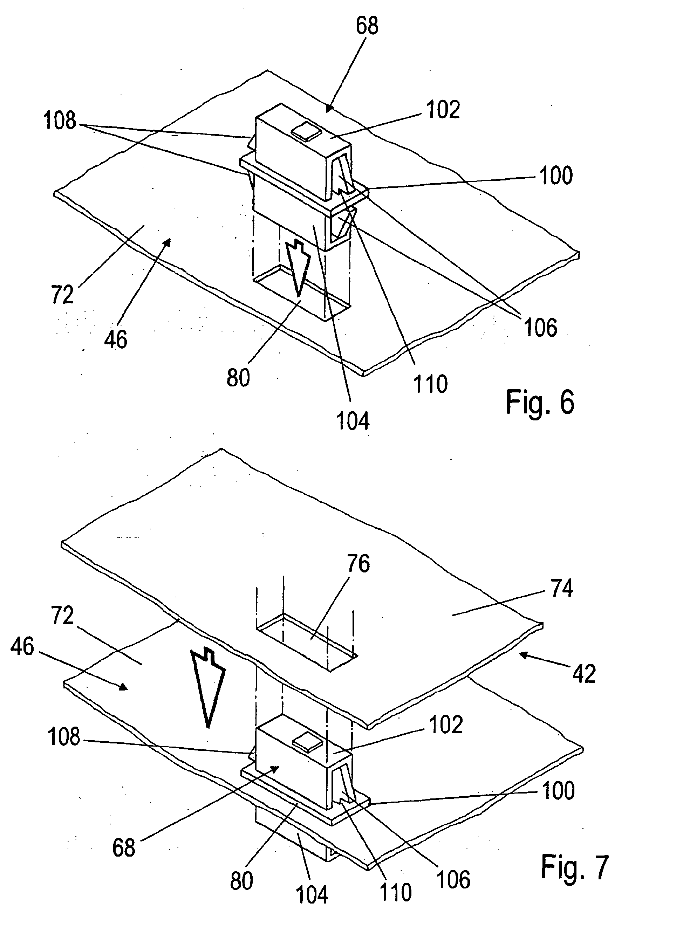

Die Figur 6 zeigt in perspektivischer Darstellung den bei der Montage des Pultteils 12 auf dem Schrankunterteil 10 verwendeten Doppelverbinder 68. In der Darstellung der Figur 6 ist die Situation dargestellt, in welcher der Doppelverbinder 68 einseitig in den Ausbruch 80 am Rahmen 72 an der oberen Seite 46 des Schrankunterteils 10 eingeführt wird.

Der Doppelverbinder 68 weist eine Grundplatte 100 auf, die eine größere Fläche als der Ausbruch 80 aufweist und somit im eingeführten Zustand des Doppelverbinders 68 über dessen Randbereich hinausragt. Beidseitig an der Grundplatte 100 sind zwei langgestreckte, quaderförmige Verbinderkörper 102 und 104 angeordnet, die spiegelsymmetrisch zur Grundplatte 100 ausgebildet sind. Beispielsweise an den beiden kurzen Querseiten des Verbinderkörpers 104 sind jeweils federvorgespannte Anlaufschrägen 106 und 108 angeordnet. Beim Einführen des Verbinderkörpers 104 in den ebenfalls langgestreckten rechteckigen Ausbruch 80 laufen die federvorgespannten Anlaufschrägen 106 und 108 an dessen Rand auf und werden in den Verbinderkörper 104 hineingedrückt.

Am Ende jeder Auflaufschräge 106 und 108 ist nahe der Grundplatte 100 jeweils ein Rücksprung 110 ausgeformt, der bewirkt, dass bei vollständigem Einschieben des Verbinderkörper 104 in den Ausbruch 80 die jeweilige Auflaufschräge 106 und 108 aus dem Verbinderkörper 104 herausschnappt. Dabei hintergreift der Rücksprung 110 an der anderen Seite des Ausbruchs 80 den Rahmen 72 an der oberen Seite 46 des Schrankunterteils 10. Der Rücksprung 110 weist einen Ausbruch aus, welche der Dicke des Rahmens 72 entspricht.

Die Figur 7 zeigt wiederum den bei der Montage des Pultteils 12 auf dem Schrankunterteil 10 verwendeten Doppelverbinder 68. In der Darstellung der Figur 6 ist die Situation dargestellt, in welcher der Doppelverbinder 68 einerseits in den Ausbruch 80 am Rahmen 72 an der oberen Seite 46 des Schrankunterteils 10 eingeschnappt ist und andererseits in den Ausbruch 76 am Rahmen 74 an der unteren Seite 42 des Pultteils 12 eingeführt wird.

Das Anhand der Figur 6 hinsichtlich der Funktion und Wirkungsweise des Doppelverbinders 68 beim Einführen in die Ausbruch 80 am Rahmen 72 an der oberen Seite 46 des Schrankunterteils 10 Ausgeführte gilt sinngemäß auch für das Einführen in den Ausbruch 76 am Rahmen 74 an der unteren Seite 42 des Pultteils 12.

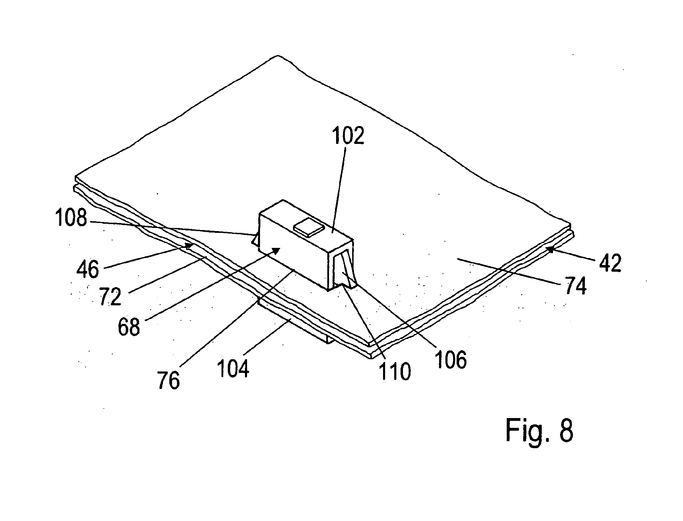

Die Figur 8 schließlich zeigt die Situation, in welcher der Doppelverbinder 68 einerseits in den Ausbruch 80 am Rahmen 72 an der oberen Seite 46 des Schrankunterteils 10 und andererseits in den Ausbruch 76 am Rahmen 74 an der unteren Seite 42 des Pultteils 12 eingeschnappt ist und die beiden Rahmen 72 und 74 zueinander festgelegt sind. Der Abstand zwischen den beiden Rahmen 72 und 74 ist durch die Dicke der Grundplatte 100 des Doppelverbinders 68 festgelegt. Die Grundplatte 100 hat eine Dicke, die im Wesentlichen der Dicke der (in der Figur 8 nicht dargestellten) umlaufenden Dichtung 92 entspricht, und dient somit dazu, dass die eingelegte Dichtung 92 nicht zwischen dem Pultteil 12 und dem Schrankunterteil 10 zerquetscht wird.

## Patentansprüche

1. Schaltpult mit einem Schrankunterteil (10), einem Pultteil (12) und einem Auf - satzteil (14), wobei das Pultteil (12) auf dem Schrankunterteil (10) angeordnet ist und über dessen Vorderseite (16) vorsteht, wobei das Aufsatzteil (14) an dem Pultteil (12) angeordnet ist und wobei der gegenüber dem Aufsatzteil (14) vorstehende Teil (18) des Pultteils (12) mittels einer Blende (20) verschließbar ist,
**dadurch gekennzeichnet,**
**dass** die Rückseite (22) des Pultteils (12) von der Rückseite (24) des Schrankunterteils (10) ausgehend in Richtung auf die Blende (20) des Pultteils (12) geneigt ausgebildet ist, und
**dass** das Aufsatzteil (14) mit dessen unterer Seite (26) an der geneigten Rückseite (22) des Pultteils (12) angeordnet ist, deren Neigung der Neigung der zugekehrten unteren Seite (26) des Aufsatzteils (14) entspricht.

2. Schaltpult nach Anspruch 1,
**dadurch gekennzeichnet,**
**dass** die Rückseite (22) des Pultteils (12) im Winkel (α) von etwa 45° zur Horizontalen geneigt ist.

3. Schaltpult nach Anspruch 1 oder 2,
**dadurch gekennzeichnet,**
**dass** die Rückseite (28) des Aufsatzteils (14) mittels einer geneigten Rückwand (30) verschlossen ist, welche von der Rückseite (24) des Schrankunterteils (10) ausgeht und diese überragt.

4. Schaltpult nach Anspruch 3,
**dadurch gekennzeichnet,**
**dass** die Rückseite (28) des Aufsatzteils (14) die Rückseite (24) des Schrankunterteils (10) in einem Winkel (β) von etwa 15° überragt.

5. Schaltpult nach einem der Ansprüche 1 bis 4,
**dadurch gekennzeichnet,**
**dass** die Vorderseite (32) des Aufsatzteils (14) mittels einer geneigten Blende (34) verschließbar ist, welche von dem gegenüber dem Aufsatzteil (14) vorstehenden Teil (18) des Pultteils (12) ausgeht und in Richtung auf die Rückseite (28) des Aufsatzteils (14) geneigt ist.

6. Schaltpult nach einem der Ansprüche 1 bis 5,
**dadurch gekennzeichnet,**
**dass** die Vorderseite (32) des Aufsatzteils (14) und die Rückseite (28) des Aufsatzteils (14) in Richtung auf die obere Seite (36) des Aufsatzteils (14) zueinander geneigt sind.

7. Schaltpult nach Anspruch 6,
**dadurch gekennzeichnet,**
**dass** die die Vorderseite (32) des Aufsatzteils (14) und die Rückseite (28) des Aufsatzteils (14) in einem Winkel (γ) von etwa 10° zueinander geneigt sind.

8. Schaltpult nach einem der Ansprüche 1 bis 7,
**dadurch gekennzeichnet,**
**dass** das Aufsatzteil (14) im wesentlich gleich dem Pultteil (12) geformt ist

9. Schaltpult nach einem der Ansprüche 1 bis 8,
**dadurch gekennzeichnet,**
**dass** an der unteren Seite (26) des Aufsatzteils (14) eine Durchgangsöffnung (38) und an der geneigten Rückseite (22) des Pultteils (12) eine korrespondierende Durchgangsöffnung (40) zur Durchführung von elektrischen Einbauten und/oder Kabeln ausgebildet sind.

10. Schaltpult nach einem der Ansprüche 1 bis 9,
**dadurch gekennzeichnet,**
**dass** an der unteren Seite (42) des Pultteils (12) eine Durchgangsöffnung (44) und an der oberen Seite (46) des Schrankunterteils (10) eine korrespondierende Durchgangsöffnung (48) zur Durchführung von elektrischen Einbauten und/oder Kabeln ausgebildet sind.

11. Schaltpult nach einem der Ansprüche 1 bis 10,
**dadurch gekennzeichnet,**
**dass** zwischen der unteren Seite (26) des Aufsatzteils (14) und der geneigten Rückseite (22) des Pultteils (12) eine Mehrzahl von Schraubverbindungen (50, 52; 54, 56) wirksam ist, welche das Aufsatzteil (14) lösbar mit dem Pultteil (12) verbindet.

12. Schaltpult nach einem der Ansprüche 1 bis 11,
**dadurch gekennzeichnet,**
**dass** an der geneigten unteren Seite des Aufsatzteils eine Mehrzahl von Schraubbolzen (50, 52) und an der geneigten Rückseite (22) des Pultteils (12) korrespondierende Löcher (54, 56) zur Aufnahme der Schraubbolzen (50, 56) angeordnet sind.

13. Schaltpult nach einem der Ansprüche 1 bis 12,
**dadurch gekennzeichnet,**
**dass** zwischen der unteren Seite (26) des Aufsatzteils (14) und der geneigten Rückseite (22) des Pultteils (12) eine Dichtung (58) angeordnet ist.

14. Schaltpult nach einem der Ansprüche 1 bis 13,
**dadurch gekennzeichnet,**
**dass** die Seitenwände (60) des Aufsatzteils (14) im Wesentlichen bündig mit den Seitenwänden (62) des Pultteils (12) abschließen.

15. Schaltpult nach einem der Ansprüche 1 bis 14,
**dadurch gekennzeichnet,**
**dass** die Seitenwände (62) des Pultteils (12) im Wesentlichen bündig mit den Seitenwänden (64) des Schrankunterteils (10) abschließen.

## Claims

1. Control desk having a cabinet lower part (10), a desk part (12) and a top part (14), with the desk part (12) being arranged on the cabinet lower part (10) and projecting beyond the front face (16) of the said cabinet lower part, with the top part (14) being arranged on the desk part (12), and it being possible to close that part (18) of the desk part (12) which projects in relation to the top part (14) by means of a panel (20),
**characterized**
**in that** the rear face (22) of the desk part (12) is designed to be inclined, starting from the rear face (24) of the cabinet lower part (10), in the direction of the panel (20) of the desk part (12), and
**in that** the top part (14), by way of its lower face (26), is arranged on the inclined rear face (22) of the desk part (12), the inclination of the said rear face of the desk part corresponding to the inclination of the facing lower face (26) of the top part (14).

2. Control desk according to Claim 1,
**characterized**
**in that** the rear face (22) of the desk part (12) is inclined at an angle (α) of approximately 45° to the horizontal.

3. Control desk according to Claim 1 or 2,
**characterized**
**in that** the rear face (28) of the top part (14) is closed by means of an inclined rear wall (30) which starts from the rear face (24) of the cabinet lower part (10) and projects beyond the said rear face of the cabinet lower part.

4. Control desk according to Claim 3,
**characterized**
**in that** the rear face (28) of the top part (14) projects beyond the rear face (24) of the cabinet lower part (10) at an angle (β) of approximately 15°.

5. Control desk according to one of Claims 1 to 4,
**characterized**
**in that** the front face (32) of the top part (14) can be closed by means of an inclined panel (34) which starts from that part (18) of the desk part (12) which projects in relation to the top part (14), and is inclined in the direction of the rear face (28) of the top part (14).

6. Control desk according to one of Claims 1 to 5,
**characterized**
**in that** the front face (32) of the top part (14) and the rear face (28) of the top part (14) are inclined towards one another in the direction of the upper face (36) of the top part (14) .

7. Control desk according to Claim 6,
**characterized**
**in that** the front face (32) of the top part (14) and the rear face (28) of the top part (14) are inclined towards one another at an angle (γ) of approximately 10°.

8. Control desk according to one of Claims 1 to 7,
**characterized**
**in that** the top part (14) is formed substantially identically to the desk part (12).

9. Control desk according to one of Claims 1 to 8,
**characterized**
**in that** a passage opening (38) is formed on the lower face (26) of the top part (14) and a corresponding passage opening (40) is formed on the inclined rear face (22) of the desk part (12) for internal electrical components and/or cables to pass through.

10. Control desk according to one of Claims 1 to 9,
**characterized**
**in that** a passage opening (44) is formed on the lower face (42) of the desk part (12) and a corresponding passage opening (48) is formed on the upper face (46) of the cabinet lower part (10) for internal electrical components and/or cables to pass through.

11. Control desk according to one of Claims 1 to 10,
**characterized**
**in that** a plurality of screw connections (50, 52; 54, 56), which connect the top part (14) to the desk part (12) in a detachable manner, acts between the lower face (26) of the top part (14) and the inclined rear face (22) of the desk part (12).

12. Control desk according to one of Claims 1 to 11,
**characterized**
**in that** a plurality of stud bolts (50, 52) are arranged on the inclined lower face of the top part and corresponding holes (54, 56) for receiving the stud bolts (50, 56) are arranged on the inclined rear face (22) of the desk part (12).

13. Control desk according to one of Claims 1 to 12,
**characterized**
**in that** a seal (58) is arranged between the lower face (26) of the top part (14) and the inclined rear face (22) of the desk part (12).

14. Control desk according to one of Claims 1 to 13,
**characterized**
**in that** the side walls (60) of the top part (14) terminate substantially flush with the side walls (62) of the desk part (12).

15. Control desk according to one of Claims 1 to 14,
**characterized**
**in that** the side walls (62) of the desk part (12) terminate substantially flush with the side walls (64) of the cabinet lower part (10).

## Revendications

1. Pupitre de commande comprenant une partie inférieure d'armoire (10), une partie de pupitre (12) et une partie supérieure (14), la partie de pupitre (12) étant disposée sur la partie inférieure d'armoire (10) et dépassant de son côté avant (16), la partie supérieure (14) étant disposée sur la partie de pupitre (12) et la partie (18) de la partie de pupitre (12) qui dépasse par rapport à la partie supérieure (14) pouvant être fermée au moyen d'un panneau (20),
**caractérisé en ce que**
le côté arrière (22) de la partie de pupitre (12) est incliné depuis le côté arrière (24) de la partie inférieure d'armoire (10) dans la direction du panneau (20) de la partie de pupitre (12), et
**en ce que** la partie supérieure (14) est disposée avec son côté inférieur (26) contre le côté arrière incliné (22) de la partie de pupitre (12), dont l'inclinaison correspond à l'inclinaison du côté inférieur (26) de la partie supérieure (14) tourné vers elle.

2. Pupitre de commande selon la revendication 1,
**caractérisé en ce que**
le côté arrière (22) de la partie de pupitre (12) est incliné d'un angle (α) d'environ 45° par rapport à l'horizontale.

3. Pupitre de commande selon la revendication 1 ou 2,
**caractérisé en ce que**
le côté arrière (28) de la partie supérieure (14) est fermé au moyen d'une paroi arrière inclinée (30) qui part du côté arrière (24) de la partie inférieure d'armoire (10) et dépasse au-delà de celle-ci.

4. Pupitre de commande selon la revendication 3,
**caractérisé en ce que**
le côté arrière (28) de la partie supérieure (14) dépasse au-delà du côté arrière (24) de la partie inférieure d'armoire (10) d'un angle (β) d'environ 15°.

5. Pupitre de commande selon l'une quelconque des revendications 1 à 4,
**caractérisé en ce que**
le côté avant (32) de la partie supérieure (14) peut être fermé au moyen d'un panneau incliné (34), qui part de la partie (18) de la partie de pupitre (12) qui dépasse par rapport à la partie supérieure (14), et qui est incliné dans la direction du côté arrière (28) de la partie supérieure (14).

6. Pupitre de commande selon l'une quelconque des revendications 1 à 5,
**caractérisé en ce que**
le côté avant (32) de la partie supérieure (14) et le côté arrière (28) de la partie supérieure (14) sont inclinés l'un par rapport à l'autre dans la direction du côté supérieur (36) de la partie supérieure (14).

7. Pupitre de commande selon la revendication 6,
**caractérisé en ce que**
le côté avant (32) de la partie supérieure (14) et le côté arrière (28) de la partie supérieure (14) sont inclinés l'un par rapport à l'autre d'un angle (γ) d'environ 10°.

8. Pupitre de commande selon l'une quelconque des revendications 1 à 7,
**caractérisé en ce que**
la partie supérieure (14) est formée essentiellement de manière identique à la partie de pupitre (12).

9. Pupitre de commande selon l'une quelconque des revendications 1 à 8,
**caractérisé en ce que**
sur le côté inférieur (26) de la partie supérieure (14) est réalisée une ouverture de passage (38) et sur le côté arrière incliné (22) de la partie de pupitre (12) est réalisée une ouverture de passage correspondante (40) pour le passage de composants électriques et/ou de câbles.

10. Pupitre de commande selon l'une quelconque des revendications 1 à 9,
**caractérisé en ce que**
sur le côté inférieur (42) de la partie de pupitre (12) est réalisée une ouverture de passage (44) et sur le côté supérieur (46) de la partie inférieure d'armoire (10) est réalisée une ouverture de passage correspondante (48) pour le passage de composants électriques et/ou de câbles.

11. Pupitre de commande selon l'une quelconque des revendications 1 à 10,
**caractérisé en ce**
**qu'**entre le côté inférieur (26) de la partie supérieure (14) et le côté arrière incliné (22) de la partie de pupitre (12) sont prévues une pluralité de connexions vissées (50, 52 ; 54, 56) qui connectent la partie supérieure (14) de manière séparable à la partie de pupitre (12).

12. Pupitre de commande selon l'une quelconque des revendications 1 à 11,
**caractérisé en ce que**
sur le côté inférieur incliné de la partie supérieure sont disposés une pluralité de boulons filetés (50, 52) et sur le côté arrière incliné (22) de la partie de pupitre (12) sont disposés des trous correspondants (54, 56) pour recevoir les boulons filetés (50, 56).

13. Pupitre de commande selon l'une quelconque des revendications 1 à 12,
**caractérisé en ce**
**qu'**entre le côté inférieur (26) de la partie supérieure (14) et le côté arrière incliné (22) de la partie de pupitre (12) est disposé un joint d'étanchéité (58).

14. Pupitre de commande selon l'une quelconque des revendications 1 à 13,
**caractérisé en ce que**
les parois latérales (60) de la partie supérieure (14) se terminent essentiellement en affleurement avec les parois latérales (62) de la partie de pupitre (12).

15. Pupitre de commande selon l'une quelconque des revendications 1 à 14,
**caractérisé en ce que**
les parois latérales (62) de la partie de pupitre (12) se terminent essentiellement en affleurement avec les parois latérales (64) de la partie inférieure d'armoire (10).
